# EUROPEAN PATENT SPECIFICATION

(11) **EP 3 565 696 B1**
(45) Date of publication and mention of the grant of the patent: **03.11.2021**
(21) Application number: 17890600.4
(22) Date of filing: 09.11.2017
(51) Int. Cl.: B29C 39/44, B05B 3/00, B29B 11/06, B29B 11/14, B29B 11/16

(54) **SYSTEMS AND METHODS FOR MANUFACTURING BOAT PARTS**
SYSTEME UND VERFAHREN ZUR HERSTELLUNG VON BOOTSTEILEN
SYSTÈMES ET PROCÉDÉS DE FABRICATION DE PARTIES DE BATEAU

(30) Priority: 04.01.2017 US 201715398079
(43) Date of publication of application: 13.11.2019
(73) Proprietor: Brunswick Corporation, Mettawa, Illinois 60045 (US)
(72) Inventor: MINOGUE, Sean, Indian Harbour Beach, FL 32937 (US)
(74) Representative: Håmsø Patentbyrå AS
(86) International application number: PCT/US2017/060762
(87) International publication number: WO 2018/128710

(56) References cited:
- WO-A2-2005/030462
- US-A- 5 064 120
- US-A- 5 940 309
- US-A1- 2001 015 222
- US-A1- 2002 195 282
- US-A1- 2005 161 861
- US-A1- 2007 128 372
- US-A1- 2013 295 338
- US-A1- 2014 041 949
- US-B1- 7 797 075

## Description

### FIELD OF THE INVENTION

The present disclosure generally relates to systems, methods, and non-transitory computer readable media for manufacturing boat parts, and more particularly to real-time monitoring of materials and providing feedback to operators while manufacturing boat parts.

### BACKGROUND OF THE INVENTION

The following U.S. Patents and Patent Applications are discussed:

U.S. Patent No. 6,086,813 discloses a technique for forming self-supporting structures with thermoplastic material that incorporates a plasma-heated spray of thermoplastic material with glass fiber reinforcement, such as glass fibers. The material is sprayed into a mold which is shaped to create the desired form and configuration of the self-supporting structure. A mixture of thermoplastic powder and reinforcing fibers is carried by a stream of inert gas through a plasma region. The thermoplastic material is melted as it passes through the plasma region and the resulting plasma is sprayed against the surface of a form mold. The thickness of the resulting structure can be varied from region to region by changing the speed of movement of a spray nozzle relative to the form, using a plurality of spray nozzles that can be selectively activated and deactivated, or by providing a plurality of coats of sprayed thermoplastic material, one after another.

U.S. Patent No. 7,597,760 discloses an apparatus and a method of preparing fiber preforms that disperses fibers and binder on a forming support surface such that the materials are conditioned and then applied to the surface where the composite material solidifies. Reinforcing material, such as fiber, is mixed with binder, such as thermoplastic or thermoset materials, so that the materials adhere. Then, the adhesive mixture is dispersed in a controlled pre-determined weight ratio on the support surface where the mixture sticks to the support surface, cools and solidifies. The deposited mixture can be an open mat having interstices between fibers. The deposited mixture can also be shaped further into a final desired shape before complete solidification. This method eliminates the need for solvents and their associated problems. The process does not require a vacuum or plenum system to hold the reinforcing material in place. The preform can be made in any shape, including sections or asymmetric configurations and remain in mold while being processed to a composite molded article.

U.S. Patent Application Publication No. 2002/0145217 discloses a method of preparing fiber preforms that disperses fibers and binder on a forming support surface such that the materials are conditioned and then applied to the surface where the composite material solidifies. Reinforcing material, such as fiber, is mixed with binder, such as thermoplastic or thermoset materials, so that the materials adhere. Then, the adhesive mixture is dispersed in a controlled pre-determined weight ratio on the support surface where the mixture sticks to the support surface, cools and solidifies. The deposited mixture can also be shaped further into a final desired shape before complete solidification. This method eliminates the need for solvents and their associated problems. The process does not require a vacuum or plenum system to hold the reinforcing material in place. The preform can be made in any shape, including sections or asymmetric configurations.

U.S. Patent No. 6,878,437 discloses a thermoplastic multi-layer composite structure and in a first embodiment as a co-extruded acrylic polypropylene outer skin and high melt strength polypropylene substrate which is attracted to a first surface of a polypropylene foam core. An inner polypropylene skin is attached to a second surface of the foamed core, which can either be constructed from an expanded polypropylene or an extruded polypropylene and is attached to the outer and inner skin through the use of an adhesive. Where an extruded polypropylene foam core is provided, the skins can be attached to the foam core by adhesives or through a welding or bonding process in lieu of adhesives. Additionally, the extruded foam core can vary in density to provide a composite foam core. An all acrylic composite multi-layered structure is also provided.

U.S. Patent Application Publication No. 2015/0329179 discloses a hull form design which incorporates bi-lateral semi-sponsons disposed on either side of a non-stepped V-shaped center hull section. The semi-sponsons extend the entire length of the hull form and comprise protrusions extending away from the center section. The semi-sponsons are delimited by longitudinal steps extending below the hull bottom an equal distance from the centerline on opposite sides of the hull. This design is a hybrid of conventional "V" hulls and catamarans and improves the roll and turn initiation time of convention monohull designs.

U.S. Patent No. 5,174,228 discloses a non-continuous fiber reinforcements for resinous material having a layer of chopped strands, evenly distributed in random orientations and a confinement layer extending over and in intimate contact with layer of chopped strands. Rows of stitching are provided. Individual stitches in the rows attach the confinement layer and the chopped strands.

U.S. Patent No. 5,064,120 discloses an apparatus for use in spray-up construction of a fiberglass article in an open mold, which includes a manually operable spray gun for spraying liquid resin and liquid catalyst. The apparatus further being configured for chopping and emitting fiberglass roving together with the resin. A positive displacement resin and catalyst pump operated by an airmotor pumps resin and catalyst to the spray gun. A pneumatic electrical switch on the air-motor monitors air exhaust therefrom and is closed upon each air-exhaust pulse. The number of air-exhaust pulses of the air-motor is proportional to the cumulative amount of resin pumped. An electronic counter electrically connected to the pneumatic switch counts the number of switch closings and drives an LCD numerical display which displays the number of pulses counted. The LCD display is located on the spray gun where it can be seen by the operator during operation of the spray gun, such that the operator is continually apprised of the amount of resin which has been dispensed. Thus, the operator can stop the spray-up operation when a predetermined amount of resin has been applied to the mold. An air driven fiberglass chopper on the spray gun is supplied with air from a compressed air supply. A flow meter in line with the compressed air supply is located proximate the spray gun in view of the operator to apprise him of the rate of flow of air to the chopper.

### SUMMARY OF THE INVENTION

The invention is defined by the independent claims. The dependent claims define advantageous embodiments.

The present disclosure is related to systems, methods, and non-transitory computer readable media for manufacturing a boat part made of a fiberglass, comprised of a resin and a glass, using a mold and according to a specification that defines a desired quantity of the fiberglass to apply to the mold. In one embodiment, a system comprises an applicator configured to apply the fiberglass to the mold, a resin transporter configured to supply the resin to the applicator, and a glass transporter configured to supply the glass to the applicator. A control module is configured to make a comparison in real-time between an actual quantity of the fiberglass applied by the applicator and the desired quantity of the fiberglass to apply to the mold, and to calculate a remaining quantity of the fiberglass to apply to the mold to thereby achieve the desired quantity. The control module is configured to cause an indicator device to indicate in real-time the remaining quantity of the fiberglass to apply to the mold.

Another embodiment relates to a method for manufacturing a boat part made of a fiberglass, comprised of a resin and a glass, using a mold and according to a specification that defines a desired quantity of the fiberglass to apply to the mold. The method comprises providing an applicator configured to apply the fiberglass to the mold and supplying the resin to the applicator with a resin transporter and supplying the glass to the applicator with a glass transporter. The method further comprises taking a measurement with a first meter of an actual quantity of the resin supplied to the applicator by the resin transporter and taking a measurement with a second meter of an actual quantity of the glass supplied to the applicator by the glass transporter. The method further comprises combining the resin and the glass to form the fiberglass and applying the fiberglass to the mold with the applicator. The method further comprises making a comparison with a control module in real-time between an actual quantity of the fiberglass delivered by the applicator and the desired quantity of the fiberglass to apply to the mold, wherein the actual quantity is based on the measurement taken by the first meter and the measurement taken by the second meter, and calculating with the control module a remaining quantity of the fiberglass to apply to the mold to thereby achieve the desired quantity. The method further comprises causing an indicator device, by the control module, to indicate in real-time the remaining quantity of the fiberglass to apply to the mold.

In another embodiment, a non-transitory computer readable medium comprises a computer program for manufacturing a boat part made of a fiberglass. The fiberglass is comprised of a resin and a glass and is applied to a mold with an applicator according to a specification that defines a desired quantity of the fiberglass to apply to the mold. The resin is supplied to the applicator by a resin transporter and the glass is supplied to the applicator by a glass transporter. The non-transitory computer readable medium is in communication with a first meter that is configured to measure an actual quantity of the resin supplied to the applicator by the resin transporter. The non-transitory computer readable medium is in communication with a second meter that is configured to measure an actual quantity of the glass supplied to the applicator by the glass transporter. The non-transitory computer readable medium is in communication with an indicator device. The computer program is executable by a processor, wherein when executed by the processor the computer program receives from the specification the desired quantity of the fiberglass to apply to the mold, receives from the first meter the actual quantity of the resin supplied to the applicator by the resin transporter, receives from the second meter the actual quantity of the glass supplied to the applicator by the glass transporter, calculates an actual quantity of the fiberglass delivered by the applicator based on the actual quantity of the resin supplied to the applicator and the actual quantity of the glass supplied to the applicator, calculates a remaining quantity of the fiberglass to apply to the mold by comparing in real-time the actual quantity of the fiberglass delivered by the applicator to the desired quantity of the fiberglass to apply to the mold, and causes the indicator device to indicate in real-time the remaining quantity of fiberglass to apply to the mold.

Various other features, objects and advantages of the disclosure will be made apparent from the following description taken together with the drawings.

### BRIEF DESCRIPTION OF THE DRAWINGS

The drawings illustrate the best mode presently contemplated of carrying out the disclosure. The same numbers are used throughout the drawings to reference like features and like components. In the drawings:
FIGURE 1 is an overhead view representation of the system for manufacturing a boat part in accordance with the present disclosure;
FIGURE 2 is a schematic representation of the disclosed system;
FIGURE 3 shows a process flow for manufacturing a boat part in accordance with the present disclosure; and
FIGURES 4-7 show an exemplary embodiment of the disclosed system.

### DETAILED DESCRIPTION

In the present description, certain terms have been used for brevity, clarity, and understanding. No unnecessary limitations are to be implied therefrom beyond the requirement of the prior art because such terms are used for descriptive purposes only and are desired to be broadly construed. The different systems and methods described herein may be used alone or in combination with other systems and methods. Various equivalents, alternatives, and modifications are possible within the scope of the appended claims. Each limitation in the appended claims is desired to invoke interpretation under 35 USC §112(f), only if the terms "means for" or "step for" are explicitly recited in the respective limitation.

The present disclosure relates to systems and methods for manufacturing a boat part of fiberglass using a mold. Many boat parts are commonly made of fiberglass, including boat hulls, decks, hard tops, bridges, hatches, and liners, for example. Among the most important specifications of a boat part is its weight, which is largely driven by the amount of fiberglass used to produce it. Excess weight of the boat parts contributes to excess weight of the boat as a whole, which is particularly apparent in the case of the boat hull. Excess boat weight consumes horsepower and reduces performance. In addition, excess weight corresponds to unnecessary increases in material and labor cost to produce the boat part. In systems and methods known today, this excess weight typically goes undetected until the boat is ready to be put into the water.

Through experimentation and development, the present inventor has identified opportunities to improve upon the systems and methods known in the art. Among other aspects to be discussed below, these include improvements to the quality and consistency of the boat parts produced. These also include systems and methods for real-time tracking of data, including weight data, part information, labor hours, temperature and humidity data, cure cycles, peak exotherm data, takt time, historical weight data, and other real-time target data to be provided to operators during the manufacturing process.

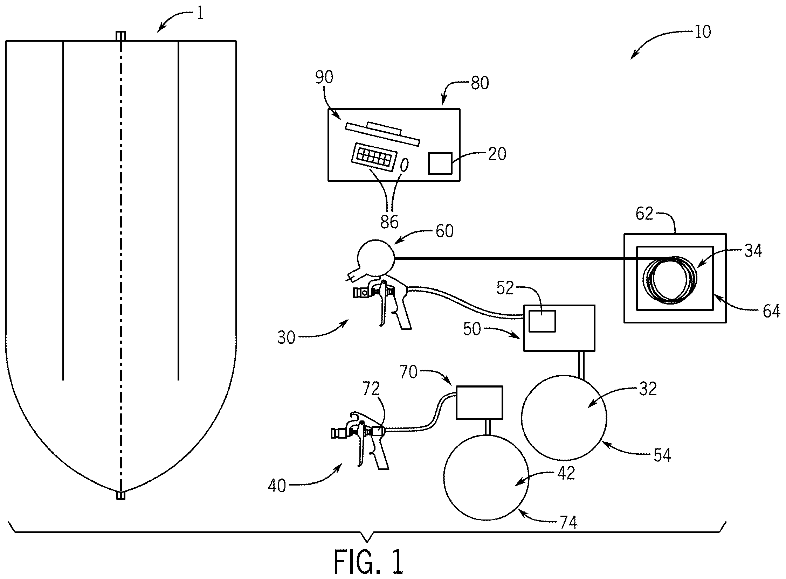

FIGURE 1 is an overhead representation of an operation for manufacturing boat parts in accordance with the present disclosure. In the embodiment shown, the system 10 is configured for manufacturing a boat hull made of fiberglass using a mold 1. The fiberglass, which is comprised of a resin 32 and a glass 34, is applied to the mold 1 with an applicator 30. A resin transporter 50 supplies the resin 32 to the applicator 30 from a resin supply 54. Likewise, a glass transporter 60 supplies the glass 34 to the applicator 30 from a glass supply 64. In the configuration shown, the resin 32 in the resin supply 54 is in substantially liquid form and the glass 34 in the glass supply 64 is a continuous strand of a solid. In the present embodiment, the resin transporter 50 includes a pump and a conduit (not separately numbered) and the glass transporter 60 includes a drive wheel feed mechanism. Alternatively, or in addition to those stated, other mechanisms known in the art for moving material from one place to another may be used.

In the embodiment shown, the applicator 30 is a chopper-style applicator as known in the art. The applicator 30 chops up or cuts the glass 34 supplied to it by the glass transporter 60, then combines the glass 34 with the resin 32 to form fiberglass as the combination exits the applicator 30. In this manner, the applicator 30 is used to apply fiberglass as a spray to the mold 1 to produce the boat hull. The present inventor has identified that it is difficult for an operator using the applicator 30 to know how much fiberglass to apply to the mold 1. Furthermore, the expected or desired quantity of fiberglass to apply to the mold 1 often varies in different regions. Therefore, the present inventor has identified that this lack of information or knowledge for the operator results in deviations from the boat part specification and variances in the weight of the completed part.

In the same regard, while the present disclosure generally refers to manufacturing boat parts, and often boat hulls specifically, it should be recognized that the presently disclosed systems, methods, and non-transitory computer readable medium are useful in manufacturing anything made of fiberglass, including but not limited to boat hulls, decks, hard tops, bridges, hatches, and liners.

As shown in FIGURE 1, the systems and methods of the present disclosure include a control module 80 configured to make a comparison in real-time between the actual quantity of fiberglass applied by the applicator 30 and the desired quantity of fiberglass to be applied, as defined by the specification 20. An indicator device 90 indicates in real-time to the operator of the applicator 30, based upon the comparison of the control module 80, the remaining quantity of fiberglass to apply to the mold 1 to achieve the desired quantity of fiberglass defined in the specification 20.

In the embodiment shown, the actual quantity of fiberglass applied by the applicator 30 is based on the sum of the actual quantity of resin 32 and the actual quantity of glass 34 that is supplied to the applicator 30 by the resin transporter 50 and the glass transporter 60, respectively. Specifically, the actual quantity of resin 32 supplied to the applicator 30 by the resin transporter 50 is measured by a flow meter 52. The flow meter 52 is configured to be in communication with the resin transporter 50 to determine the flow of resin 32 being supplied from the resin supply 54 to the applicator 30. Likewise, the actual supply of glass 34 being supplied to the applicator 30 by the glass transporter 60 from the glass supply 64 is measured using a scale 62. The scale 62 measures the mass of glass 34 supplied by the glass transporter 60 to the applicator 30, whereby the mass of the glass supply 64 decreases as the applicator 30 applies the fiberglass. In one embodiment, the scale 62 is comprised of one or more load cells. However, other mechanisms for measuring mass are known in the art.

FIGURE 1 also shows an applicator 40 used by the operator for applying a gelcoat 42 to a boat part, in this case a boat hull. The gelcoat 42 is supplied to the applicator 40 from a gelcoat supply 74 by a gelcoat transporter 70. As shown, the applicator 40 includes a sensor 72 that measures the actual quantity of gelcoat 42 being applied by the applicator 40. It should be noted that while the gelcoat 42 and the fiberglass are shown to be applied using different applicators, applicator 40 and applicator 30, respectively, one applicator could be configured to apply both. Likewise, while the flow meter 52 is shown to be substantially integral to the resin transporter 50, whereas the sensor 72 is shown to be integral to the applicator 40, it should be known that the flow meter 52 and the sensor 72 may each be positioned anywhere in communication between the resin supply 54 and the applicator 30, and between the gelcoat supply 74 and the applicator 40, respectively. Moreover, alternate forms of measurement devices may be used in place of the flow meter 52 and sensor 72, such as a scale to measure the mass of resin 32 and gelcoat 42 supplied to the applicator 30 and the applicator 40, respectively, as opposed to the respective flows.

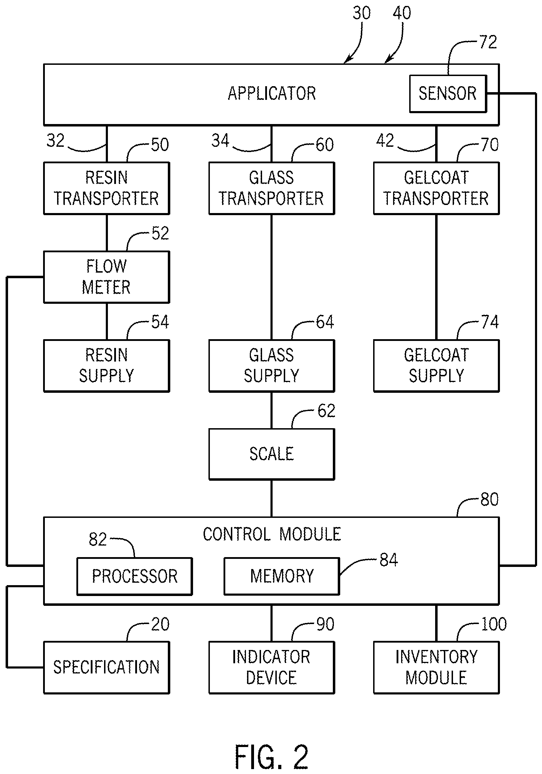

FIGURE 2 is a schematic representation of the communication of materials and information between and amongst the exemplary components shown in FIGURE 1. It should be noted that the lines shown between various components illustrate only one possible configuration for communicating between these components.

In the representation of material flow shown in FIGURE 2, resin 32 is supplied to the applicator 30 from the resin supply 54, in communication with the flow meter 52, via the resin transporter 50. Likewise, glass 34 is supplied to the applicator 30 from the glass supply 64 through the glass transporter 60. The gelcoat 42 supplied to the applicator 40 from the gelcoat supply 74 through the gelcoat transporter 70. The supply of gelcoat 42 to the applicator 40 is also in communication with the sensor 72 within the applicator 40. The applicator 30 and the applicator 40 are represented as a single component in recognition that the same device may be used to apply the resin 32 and glass 34 (together as fiberglass) and the gelcoat 42 in certain embodiments, as previously discussed.

Now addressing the flow of information as depicted by FIGURE 2, the flow meter 52 provides data to the control module 80 regarding the actual quantity of resin 32 being supplied from the resin supply 54 to the applicator 30. Likewise, the scale 62 provides data to the control module 80 regarding the actual quantity of glass 34 being supplied from the glass supply 64 to the applicator 30. The sensor 72 within applicator 40 provides data to the control module 80 regarding the actual quantity of the gelcoat 42 being supplied from the gelcoat supply 74 to the applicator 40.

In the embodiment shown, the control module 80 includes a processor 82 and a non-transitory memory 84, which may also be referred to as a non-transitory computer readable medium, each in communication with the other. The specification 20 is also shown to be in communication with the control module 80. In one embodiment, the specification 20 is stored within the memory 84. The memory 84 may also store one or more computer programs or executable code to facilitate the communication described herein.

The control module 80 is also in communication with the indicator device 90 and is configured to cause the indicator device 90 to provide real-time feedback to the operator regarding such data as the actual quantities of resin 32, glass 34, and gelcoat 42 supplied to the applicator 30 and applicator 40, respectively, relative to the desired quantities provided in the specification 20. As shown in FIGURE 1, the operator may interact with the control module 80 and indicator device 90 through use of an input device 86, such as a keyboard and mouse. Returning to FIGURE 2, the control module 80 is also shown to be in communication with an inventory module 100. In one embodiment, the control module 80 communicates the total quantity of resin 32, glass 34, and/or gelcoat 42 supplied to the applicator 30 and/or applicator 40 over a period of time. Although the inventory module 100 is optional, this information may be useful for accounting control and the management of raw materials.

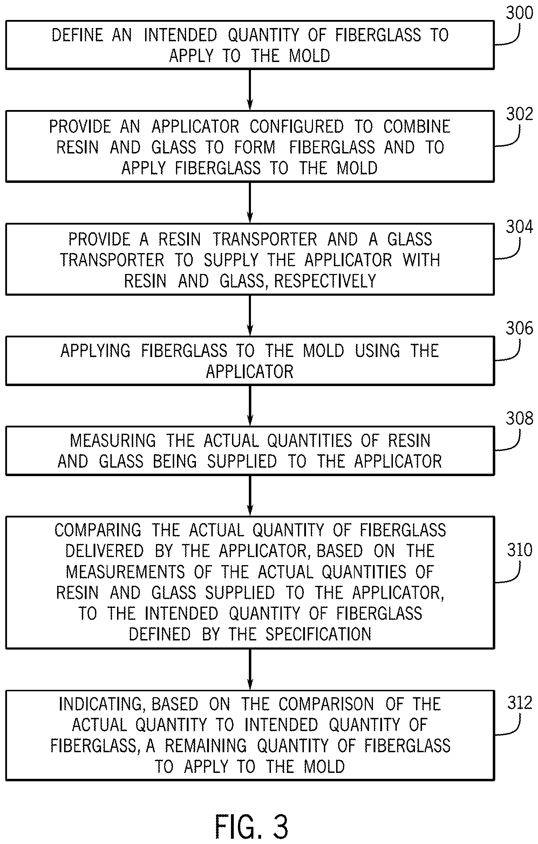

FIGURE 3 shows an exemplary process flow for manufacturing a boat part in accordance with the present disclosure. The process flow once again uses the example of manufacturing a boat hull, but is applicable to the manufacturing of any fiberglass part. In step 300, a desired quantity of fiberglass to be applied to the mold 1 to manufacture a given boat hull is defined in the specification 20. In step 302, an applicator 30 is provided, which is configured to combine resin 32 and glass 34 to form fiberglass and to apply the fiberglass to the mold 1. In applicators known in the art, the operator typically applies the fiberglass by squeezing a trigger on the applicator. In step 304, a resin transporter 50 and a glass transporter 60 are provided, supplying the applicator 30 with resin 32 and glass 34, respectively. The applicator 30 combines the resin 32 and glass 34 into fiberglass as it applies or sprays the combination into the mold 1 in step 306. During this time, the actual quantities of resin 32 and glass 34 being supplied to the applicator 30 are measured in step 308. In step 310, the actual quantity of fiberglass being applied by the applicator 30, based on the actual quantities of resin 32 and glass 34 measured in step 308, is compared to the desired quantity of fiberglass defined by the specification 20 from step 300. In step 312, an indication is provided to show the comparison of the actual quantity of fiberglass applied by the applicator 30 relative to desired quantity of fiberglass from step 310, as well as a remaining quantity of fiberglass to be applied to the mold 1 based upon this comparison.

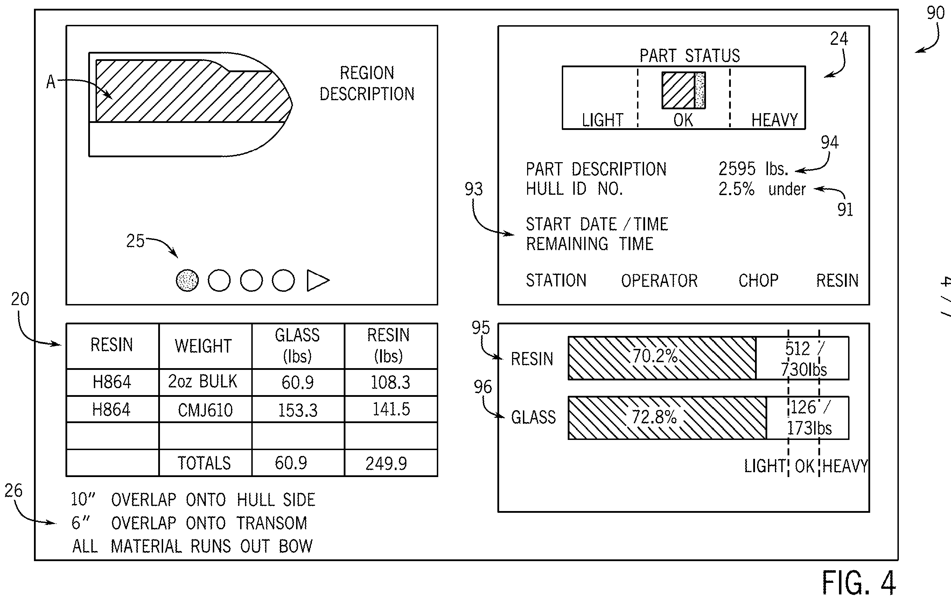

FIGURE 4 shows an exemplary indicator device 90, in this example a display, to indicate the actual quantity of fiberglass applied to the mold 1 relative to the desired quantity defined in the specification 20. This display provides the operator with real-time feedback regarding the actual quantity of fiberglass applied to the mold 1 relative to the desired quantity defined by the specification 20. In the embodiment shown, a boat part graphic is shown on the display to identify the present region of the mold where fiberglass is being applied. Various characteristics of the boat part graphic, including but not limited to colors and text messages, may be changed based on the actual quantity of fiberglass applied to the mold relative to the desired quantity defined in the specification. The present inventor has identified that this real-time feedback improves both the precision and accuracy of thicknesses, weights, and overall quality of the final boat part, as well as other manufacturing metrics as previously described.

As previously discussed, the control module 80 is configured to make a comparison in real-time between the actual quantities of the resin 32, glass 34, and gelcoat 42 applied and the desired quantities of each as defined by the specification 20. The specification 20 may further define the desired quantity of fiberglass to be applied to the mold 1 for particular regions of the mold 1, corresponding to particular regions of the boat part being produced. For example, different regions may require thicker applications, or be built upon previous applications.

FIGURE 4 shows an indicator device 90 displaying an exemplary first phase of a sequence 25 defined by the specification 20 for manufacturing a boat part. In the embodiment shown, the filled-in circle indicates that the present phase of production is the first phase, that there are no past phases that have already been completed, and there are future phases to complete next. This first phase of the sequence 25 corresponds to manufacturing the first region A of the boat part. The desired quantities of resin 32 and glass 34 for the first region A, together as fiberglass, are displayed by the indicator device 90. In the embodiment shown, the display further indicates a resin comparison 95 and a glass comparison 96, which show the actual quantities of resin 32 and glass 34 already applied to the mold 1 within the first region A, relative to the desired quantities defined for the first region A in the specification 20. In the embodiment shown, the resin comparison 95 and glass comparison 96 further include visual indications of whether the percent of resin 32 and glass 34 applied to the first region A, relative to desired quantities, are currently light, OK, or heavy. As described, this allows the operator to make real-time decisions while producing the first region A of the boat part, such as deciding to apply more fiberglass to the first region A, or to advance to the next phase within the sequence 25.

In the exemplary display of indicator device 90 shown, additional information is also provided to the operator, including the weight progress 24 based on the weight 94 of fiberglass applied to the mold 1 relative to desired. The indicator device 90 also shows the remaining (or excess) amount of fiberglass 91 to be applied (or already over-applied) relative to the desired quantity defined in the specification 20. A start date and time is displayed, as well as the remaining time 93 for the part or region to be produced within the allotted takt time (expected time) defined in the specification 20. A listing of the station, operation, chop (glass 34 in chopped up segments), and resin 32 for the part's production to date is also displayed.

Other information that would be helpful to the operator may also be provided within a comment field 26 on the display of the indicator device 90. In the embodiment shown, the comment field 26 provides textual tips to the operator for producing the first region A in accordance with the specification 20. It should be recognized that other comments, such as those included by the operators themselves, may also be added to the comment field 26, for example, using the input device 86. In total, the indicator device 90 allows the operator to make adjustments in real-time to provide boat parts with accuracy and precision relative to the specification 20. Alternatively, in one embodiment, the control module 80 automatically generates a modified build plan when the fiberglass applied to a past region of the mold deviates from the desired quantity defined by the specification by a threshold amount. These adjustments may also be made across parts, whereby excess weight of one part can be offset by lightening the weight of another part within the same boat part.

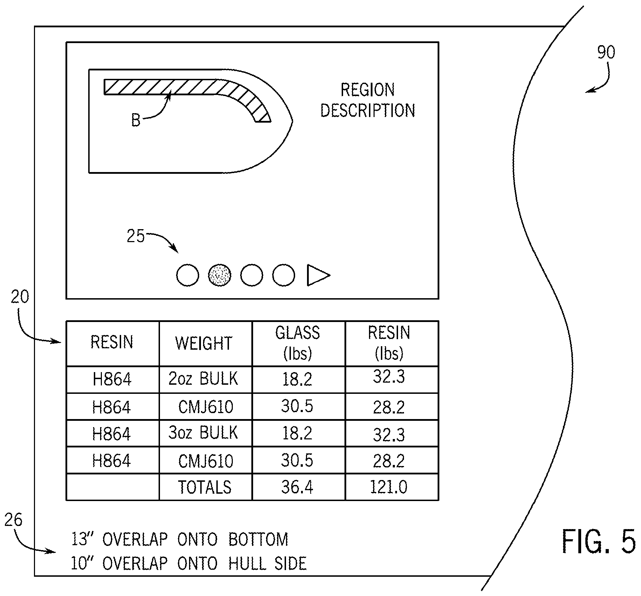

FIGURE 5 shows a display of indicator device 90 corresponding with a second phase of the sequence 25. In this embodiment, the second phase corresponds to production of the second region B. The display also includes corresponding portions of the specification 20 and corresponding tips in the comment field 26 for the second region B.

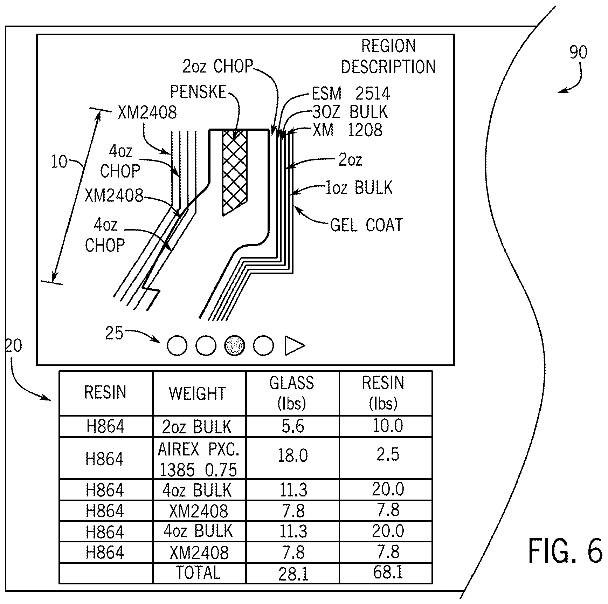

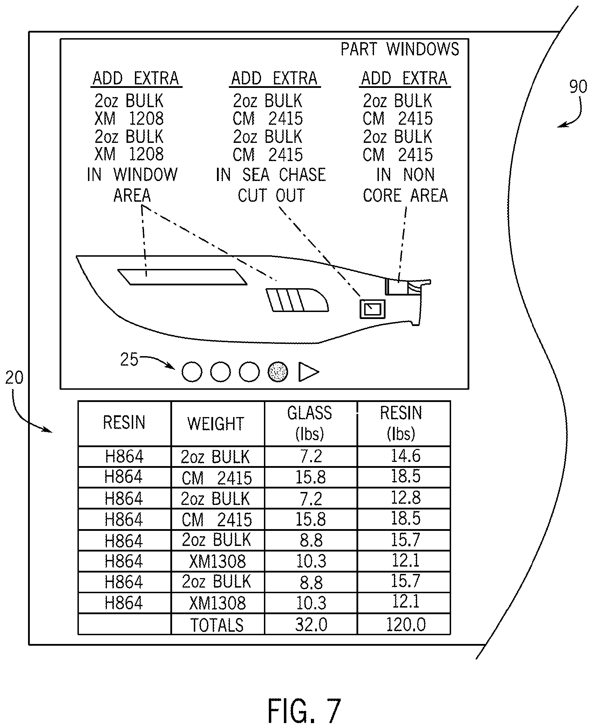

As shown in FIGURE 6, the display of indicator device 90 may also show different views of the boat part, such as the cutaway view shown as the third phase of sequence 25. FIGURE 7 shows a display of indicator device 90 showing the port side of a partially completed boat part. Specifically, the fourth phase of sequence 25 is shown, in which additional materials are defined by the specification 20 to be added to the "window areas," "sea chase cut out," and "non core area." In FIGURES 5-7, additional data would also normally be provided on the right side of the display in the same manner described for FIGURE 4. Although not shown in FIGURES 6 and 7, a comment field 26 may also be included as is helpful or necessary.

It should be recognized that greater or fewer phases within the sequence 25 may be incorporated into the indicator device 90, depending upon the level of detail and real-time indication that would be helpful to the operator for the particular boat part being produced. Furthermore, while the indicator device 90 is generally shown to be a display, such as a computer monitor, other visual depictions that portray the actual quantity of fiberglass applied to the mold 1 relative to the desired quantity defined in the specification 20 would also be known in the art.

## Claims

1. A system for manufacturing a boat part made of a fiberglass, comprised of a resin (32) and a glass (34), using a mold (1) and according to a specification that defines a desired quantity of the fiberglass to apply to the mold (1), the system comprising:
- an applicator (30) configured to apply the fiberglass to the mold (1);
- a resin transporter (50) configured to supply the resin (32) to the applicator (30);
- a glass transporter (60) configured to supply the glass (34) to the applicator (30);
- a control module (80) and
- an indicator device (90);
**characterized in that**
said control module (80) is configured to determine an actual quantity of fiberglass applied by the applicator (30) based on a sum of an actual quantity of resin (32) and an actual quantity of glass (34) that is supplied to the applicator (30) by the resin transporter (50) and the glass transporter (60), respectively, and to make a comparison in real-time between the actual quantity of the fiberglass applied by the applicator (30) and a desired quantity of the fiberglass to apply to the mold (1), and to calculate a remaining quantity of the fiberglass to apply to the mold (1) to thereby achieve the desired quantity; and
- **in that** the control module (80) is configured to cause the indicator device (90) to indicate in real-time the remaining quantity of the fiberglass to apply to the mold (1),
the system further comprising a first meter that takes a measurement of the actual quantity of the resin (32) supplied to the applicator (30) by the resin transporter (50) and a second meter that takes a measurement of the actual quantity of the glass (34) supplied to the applicator (30) by the glass transporter (60).

2. The system according to claim 1, wherein the boat part has a plurality of parts and the mold (1) has a plurality of regions that correspond to the plurality of parts, wherein the desired quantity of the fiberglass comprises a plurality of desired quantities of the fiberglass, and wherein the plurality of desired quantities of the fiberglass correspond to the plurality of regions of the mold (1).

3. The system according to claim 1, wherein the first meter is a flow meter (52).

4. The system according to claim 1, wherein the second meter is a scale, optionally wherein the scale (62) comprises a load cell.

5. The system according to claim 1, wherein the desired quantity of the fiberglass to apply to the mold (1) is correlated to a desired weight of the boat part.

6. The system according to claim 1, wherein the desired quantity of the fiberglass to apply to the mold (1) is correlated to a desired thickness of the boat part.

7. The system according to claim 1, wherein the indicator device (90) comprises a visual display, optionally wherein the visual display displays in real-time a weight of the actual quantity of the fiberglass applied to the mold (1).

8. The system according to claim 1, further comprising an applicator (40) configured to apply a gelcoat (42) to the boat part and further comprising a sensor that takes a measurement of an actual quantity of the gelcoat (42) applied by the applicator (40), wherein the specification defines a desired quantity of the gelcoat (42) to apply to the boat part, wherein the control module (80) is configured to make a comparison in real-time between the actual quantity of gelcoat (42) applied by the applicator (40) and the desired quantity to apply to the boat part, and to calculate a remaining quantity of the gelcoat (42) to apply to the mold (1) to thereby achieve the desired quantity, and wherein the control module (80) configured to cause the indicator device (90) to indicate in real-time the remaining quantity of the gelcoat (42) to apply to the boat part.

9. The system according to claim 1, wherein the control module (80) counts a total quantity of the resin (32) and a total quantity of the glass (34) delivered by the applicator (40) over a period of time, and wherein the control module (80) is configured to output the total quantity of the resin (32) and the total quantity of the glass (34) to an inventory database.

10. The system according to claim 1, wherein the indicator device (90) comprises a visual display, wherein the visual display displays a boat part graphic that is specific to a present region of the plurality of regions of the mold (1) where the fiberglass is presently being applied, optionally wherein the control module (80) is configured to change a characteristic of the boat part graphic based on the comparison between the actual quantity of the fiberglass applied by the applicator (30) and the desired quantity of the fiberglass to be applied as defined by the specification, optionally wherein the specification defines an expected duration for applying the fiberglass to the mold (1), wherein the control module (80) is configured to count an elapsed time that the fiberglass has been applied to the mold (1), and wherein the control module (80) is further configured to calculate a remaining time between the elapsed time and the expected duration and to cause the visual display to display the remaining time.

11. The system according to claim 2, wherein a past region of the plurality of regions has had fiberglass applied, wherein the control module (80) is configured to generate a modified build plan for applying the fiberglass to the mold (1) when the actual quantity of the fiberglass applied to the past region deviates from the desired quantity of the fiberglass defined by the specification by a threshold amount, and wherein the control module (80) is configured to cause the indicator device (90) to indicate the modified build plan.

12. The system according to claim 2, wherein the specification further defines a sequence for applying the fiberglass to the plurality of regions of the mold (1), and wherein the control module (80) is configured to cause the indicator device (90) to indicate a present region of the plurality of regions where fiberglass is presently being applied.

13. A method for manufacturing a boat part made of a fiberglass, comprised of a resin (32) and a glass (34), using a mold (1) and according to a specification that defines a desired quantity of the fiberglass to apply to the mold (1), the method comprising:
- providing an applicator (30) configured to apply the fiberglass to the mold (1);
- supplying the resin (32) to the applicator (30) with a resin transporter (50);
- supplying the glass (34) to the applicator (30) with a glass transporter (60);
- taking a measurement with a first meter of an actual quantity of the resin (32) supplied to the applicator (30) by the resin transporter (50);
- taking a measurement with a second meter of an actual quantity of the glass (34) supplied to the applicator (30) by the glass transporter (60);
- combining the resin (32) and the glass (34) to form the fiberglass and applying the fiberglass to the mold (1) with the applicator (30);
- making a comparison with a control module (80) in real-time between an actual quantity of the fiberglass delivered by the applicator (30) and the desired quantity of the fiberglass to apply to the mold (1), wherein the actual quantity is based on a sum of the measurement taken by the first meter and the measurement taken by the second meter;
- calculating with the control module (80) a remaining quantity of the fiberglass to apply to the mold (1) to thereby achieve the desired quantity; and
- causing an indicator device (90), by the control module (80), to indicate in real-time the remaining quantity of the fiberglass to apply to the mold (1).

14. The method of claim 13, wherein the boat part has a plurality of parts and the mold (1) has a plurality of regions that correspond to the plurality of parts, wherein the desired quantity of the fiberglass comprises a plurality of desired quantities of fiberglass, and wherein the plurality of desired quantities of the fiberglass correspond to the plurality of regions of the mold (1).

15. A non-transitory computer readable medium comprising a computer program for carrying out the method of claim 13.

## Patentansprüche

1. System zur Herstellung eines Bootsteils aus Glasfasern, aufweisend ein Kunstharz (32) und ein Glas (34), unter Verwendung einer Form (1) und gemäss einer Vorgabe, welche eine gewünschte auf die Form aufzutragende Menge an Glasfasern definiert, wobei das System aufweist:
- einen Applikator (30), welcher ausgebildet ist, die Glasfasern auf die Form (1) aufzutragen;
- einen Kunstharz-Transporter (50), welcher ausgebildet ist, das Kunstharz (32) dem Applikator (30) zuzuführen;
- einen Glas-Transporter (60), welcher ausgebildet ist, das Glas (34) dem Applikator (30) zuzuführen;
- ein Steuermodul (80) und
- eine Indikatorvorrichtung (90);
**dadurch gekennzeichnet, dass** das besagte Steuermodul (80) ausgebildet ist, um eine tatsächliche Menge an durch den Applikator (30) aufgetragenen Glasfasern basierend auf der Summe von einer tatsächlichen Menge an Kunstharz (32) und einer tatsächlichen Menge an Glas (34), welche durch den Kunstharz-Transporter (50) bzw. durch den Glas-Transporter (60) dem Applikator (30) zugeführt wird, zu bestimmen, und einen Echtzeit-Vergleich zwischen dertatsächlichen Menge der vom Applikator (30) aufgetragenen Glasfasern und einer gewünschten Menge an auf die Form (1) aufzutragenden Glasfasern zu machen, und eine Restmenge der auf die Form (1) aufzutragenden Glasfasern zu berechnen, um dadurch die gewünschte Menge zu erlangen; und
dass das Steuermodul (80) ausgebildet ist, die Indikatorvorrichtung (90) zu veranlassen, in Echtzeit die Restmenge an auf die Form (1) aufzutragenden Glasfasern anzuzeigen,
wobei das System ferner ein erstes Messgerät aufweist, welches eine Messung der tatsächlichen Menge an dem Applikator (30) durch den Kunstharz-Transporter (50) zugeführtem Kunstharz (32) durchführt, und ein zweites Messgerät aufweist, welches eine Messung der tatsächlichen Menge an dem Applikator (30) durch den Glas-Transporter (60) zugeführtem Glas (34), durchführt.

2. System gemäss Anspruch 1, wobei der Bootsteil eine Vielzahl an Teilen aufweist, und wobei die Form (1) eine Vielzahl von Bereichen aufweist, welche mit der Vielzahl von Teilen korrespondieren, wobei die gewünschte Menge an Glasfasern eine Vielzahl von gewünschten Mengen der Glasfasern enthält, und wobei die Vielzahl der gewünschten Mengen an Glasfasern mit der Vielzahl der Bereichen der Form (1) korrespondieren.

3. System gemäss Anspruch 1, wobei das erste Messgerät ein Durchflussmessgerät (52) ist.

4. System gemäss Anspruch 1, wobei das zweite Messgerät eine Waage ist, wobei die Waage (62) optional eine Messdose aufweist.

5. System gemäss Anspruch 1, wobei die gewünschte Menge an auf die Form (1) aufzutragenden Glasfasern mit einem gewünschten Gewicht des Bootsteils korreliert.

6. System gemäss Anspruch 1, wobei die gewünschte Menge an auf die Form (1) aufzutragenden Glasfasern mit einer gewünschten Dicke des Bootsteils korreliert.

7. System gemäss Anspruch 1, wobei die Indikatorvorrichtung (90) eine optische Anzeige aufweist, wobei optional die optische Anzeige in Echtzeit ein Gewicht der tatsächlichen Menge an auf die Form (1) aufzutragenden Glasfasern anzeigt.

8. System gemäss Anspruch 1, ferner aufweisend einen Applikator (40), welcher ausgebildet ist, eine Gelschicht (42) auf das Bootsteil aufzutragen und ferner aufweisend einen Sensor, welcher eine Messung einer tatsächlichen Menge an vom Applikator (40) aufgetragener Gelschicht (42) durchführt, wobei die Vorgabe eine gewünschte Menge der auf das Bootsteil aufzutragenden Gelschicht (42) definiert, wobei das Steuermodul (80) ausgebildet ist, einen Echtzeit-Vergleich zwischen der tatsächlichen Menge an vom Applikator (40) aufgetragener Gelschicht (42) und der gewünschten auf das Bootsteil aufzutragenden Menge zu machen, und eine Restmenge der auf die Form (1) aufzutragenden Gelschicht (42) zu berechnen, um dadurch die gewünschte Menge zu erhalten, und wobei das Steuermodul (80) ausgebildet ist, die Indikatorvorrichtung (90) zu veranlassen, in Echtzeit die Restmenge der auf das Bootsteil aufzutragenden Gelschicht (42) anzuzeigen.

9. System gemäss Anspruch 1, wobei das Steuermodul (80) eine Gesamtmenge des Kunstharzes (32) und eine Gesamtmenge des Glases (34) berechnet, welche durch den Applikator (40) über eine Zeitdauer zugeführt werden, und wobei das Steuermodul (80) ausgebildet ist, die Gesamtmenge an Kunstharz (32) und die Gesamtmenge an Glas (34) an eine Bestandes-Datenbank weiterzugeben.

10. System gemäss Anspruch 1, wobei die Indikatorvorrichtung (90) eine optische Anzeige aufweist, wobei die optische Anzeige eine Bootsteil-Grafik anzeigt, welche spezifisch für einen gegenwärtigen Bereich der Vielzahl von Bereichen der Form (1) ist, auf welche die Glasfasern gegenwärtig aufgetragen werden, wobei optional das Steuermodul (80) ausgebildet ist, eine Eigenschaft der Bootsteil-Grafik zu ändern, basierend auf dem Vergleich zwischen der tatsächlichen Menge der vom Applikator (30) aufgetragenen Glasfasern und der gewünschten Menge von aufzutragenden Glasfasern, wie von der Vorgabe definiert, wobei optional die Vorgabe eine erwartete Dauer für das Auftragen der Glasfasern auf die Form (1) definiert, wobei das Steuermodul (80) ausgebildet ist, eine abgelaufene Zeit zu zählen, während welcher die Glasfasern auf die Form (1) aufgetragen wurden, und wobei das Steuermodul (80) ferner ausgebildet ist, eine Restzeit zwischen der abgelaufenen Zeit und der erwarteten Dauer zu berechnen, und die optische Anzeige zu veranlassen, die Restzeit anzuzeigen.

11. System gemäss Anspruch 2, wobei auf einen vergangenen Bereich der Vielzahl von Bereichen Glasfasern aufgetragen wurden, wobei das Steuermodul (80) ausgebildet ist, einen modifizierten Bauplan für das Auftragen der Glasfasern auf die Form (1) zu generieren, wenn die tatsächliche Menge der auf den vergangenen Bereich aufgetragenen Glasfasern abweicht von der gewünschten Menge der von der Vorgabe durch eine Grenzmenge definierten Glasfasern, und wobei das Steuermodul (80) ausgebildet ist, die Indikatorvorrichtung (90) zu veranlassen, den modifizierten Bauplan anzuzeigen.

12. System gemäss Anspruch 2, wobei die Vorgabe ferner eine Abfolge definiert, zum Auftragen der Glasfasern auf die Vielzahl der Bereiche der Form (1), und wobei das Steuermodul (80) ausgebildet ist, die Indikatorvorrichtung (90) zu veranlassen, einen gegenwärtigen Bereich der Vielzahl von Bereichen, auf welche Glasfasern gegenwärtig aufgetragen wird, anzuzeigen.

13. Verfahren zur Herstellung eines aus Glasfasern hergestellten Bootsteils, aufweisend ein Kunstharz (32) und ein Glas (34), unter Verwendung einer Form (1) und gemäss einer Vorgabe, welche eine gewünschte Menge von auf die Form (1) aufzutragenden Glasfasern definiert, wobei das Verfahren beinhaltet:
- Bereitstellen eines Applikators (30), welcher ausgebildet ist, die Glasfasern auf die Form (1) aufzutragen;
- Zuführen des Kunstharzes (32) dem Applikator (30) durch einen Kunstharz-Transporter (50);
- Zuführen des Glases (34) dem Applikator (30) durch einen Glas-Transporter (60);
- mittels eines ersten Messgeräts, Vornehmen einer Messung einer tatsächlichen Menge des Kunstharzes (32), welches dem Applikator (30) durch den Kunstharz-Transporter (50) zugeführt wird;
- mittels eines zweiten Messgeräts, Vornehmen einer Messung einer tatsächlichen Menge des Glases (34), welches dem Applikator (30) durch den Glas-Transporter (60) zugeführt wird;
- Kombinieren des Kunstharzes (32) und des Glases (34) zur Bildung der Glasfasern und Auftragen der Glasfasern auf die Form (1) mittels des Applikators (30);
- Herstellen eines Vergleichs mittels eines Steuermoduls (80) in Echtzeit zwischen einer tatsächlichen Menge von durch den Applikator (30) zugeführten Glasfasern und der gewünschten Menge der auf die Form (1) aufzutragenden Glasfasern, wobei die tatsächliche Menge auf einer Summe der vom ersten Messgerät durchgeführten Messung und der vom zweiten Messgerät durchgeführten Messung basiert;
- mittels des Steuermoduls (80), Berechnen einer Restmenge von auf die Form aufzutragenden Glasfasern (1), um dadurch die gewünschte Menge zu erlangen; und
- mittels des Steuermoduls (80), Veranlassen einer Indikatorvorrichtung (90) zur Echtzeit-Anzeige der Restmenge von auf die Form (1) aufzutragenden Glasfasern.

14. Verfahren gemäss Anspruch 13, wobei das Bootsteil eine Vielzahl von Teilen aufweist und die Form (1) eine Vielzahl von Bereichen aufweist, welche mit der Vielzahl von Teilen korrespondieren, wobei die gewünschte Menge an Glasfasern eine Vielzahl von gewünschten Mengen an Glasfasern aufweist, und wobei die Vielzahl der gewünschten Mengen an Glasfasern mit der Vielzahl von Bereichen auf der Form (1) korrespondieren.

15. Nicht-vorübergehendes computerlesbares Medium, aufweisend ein Computerprogramm zur Ausführung des Verfahrens gemäss Anspruch 13.

## Revendications

1. Un système de fabrication d'une partie de bateau réalisée en fibre de verre, comprenant une résine (32) et un verre (34), à l'aide d'un moule (1) et selon un cahierdes charges définissant une quantité souhaitée de fibre de verre à appliquer sur le moule (1), le système comprenant :
- un applicateur (30) configuré pour appliquer la fibre de verre sur le moule (1) ;
- un transporteur de résine (50) configuré pour fournir la résine (32) à l'applicateur (30);
- un transporteur de verre (60) configuré pour fournir le verre (34) à l'applicateur (30) ;
- un module de commande (80), et
- un dispositif indicateur (90);
**caractérisé en ce que**
ledit module de commande (80) est configuré pour déterminer la quantité réelle de fibre de verre appliquée par l'applicateur (30) à base de la somme de la quantité réelle de résine (32) et de la quantité réelle de verre (34) qui est fournie à l'applicateur (30) par le transporteur de résine (50) et le transporteur de verre (60), respectivement, et pour faire une comparaison en temps réel entre la quantité réelle de fibre de verre appliquée par l'applicateur (30) et la quantité souhaitée de de fibre de verre à appliquer sur le moule (1), et pour calculer une quantité restante de fibre de verre à appliquer sur le moule (1) et atteindre ainsi la quantité souhaitée ; et
le module de commande (80) est configuré pour amener le dispositif indicateur (90) à indiquer en temps réel la quantité restante de fibre de verre à appliquer sur le moule (1),
le système comprenant en outre un premier compteur qui prend une mesure d'une quantité réelle de résine (32) fournie à l'applicateur (30) par le transporteur de résine (34) et un deuxième compteur qui prend une mesure d'une quantité réelle de verre (34) fourni à l'applicateur (30) par le transporteur de verre (60).

2. Le système selon la revendication 1, dans lequel la partie de bateau a une pluralité de parties et le moule (1) a une pluralité de régions qui correspondent à la pluralité de parties, dans lequel la quantité souhaitée de fibre de verre comprend une pluralité de quantités souhaitées de fibre de verre, et dans lequel la pluralité de quantités souhaitées de fibre de verre correspond à la pluralité de régions du moule (1).

3. Le système selon la revendication 1, dans lequel le premier compteur est un débitmètre (52).

4. Le système selon la revendication 1, dans lequel le deuxième compteur est une balance, optionnellement dans lequel la balance comprend une cellule de charge.

5. Le système selon la revendication 1, dans lequel la quantité souhaitée de fibre de verre à appliquer sur le moule (1) est corrélée à un poids souhaité de la partie de bateau.

6. Le système selon la revendication 1, dans lequel la quantité souhaitée de fibre de verre à appliquer au moule est corrélée à une épaisseur souhaitée de la partie de bateau.

7. Le système selon la revendication 1, dans lequel le dispositif indicateur (90) comprend un affichage visuel, optionnellement dans lequel l'affichage visuel affiche en temps réel un poids de la quantité réelle de fibre de verre appliquée sur le moule (1).

8. Le système selon la revendication 1, comprenant en outre un applicateur (40) configuré pour appliquer un gelcoat (42) sur la partie de bateau et comprenant en outre un capteur qui prend une mesure d'une quantité réelle du gelcoat (42) appliqué par l'applicateur (40), dans lequel le cahier de charges définit une quantité souhaitée de la gelcoat (42) à appliquer sur la partie de bateau, dans lequel le module de commande (80) est configuré pour faire une comparaison en temps réel entre la quantité réelle de gelcoat (42) appliquée par l'applicateur (40) et la quantité souhaitée à appliquer sur la partie de bateau, et pour calculer une quantité restante du gelcoat (42) à appliquer sur le moule (1) pour obtenir ainsi la quantité souhaitée, et dans lequel le module de commande (80) est configuré pour amener le dispositif indicateur (90) à indiquer en temps réel la quantité restante du gelcoat (42) à appliquer sur la partie de bateau.

9. Le système selon la revendication 1, dans lequel le module de commande (80) compte une quantité totale de résine (32) et une quantité totale de verre (34) délivrée par l'applicateur (40) sur une période de temps, et dans lequel le module de commande (80) est configuré pour sortir la quantité totale de résine (32) et la quantité totale de verre (34) dans une base de données d'inventaire.

10. Le système selon la revendication 1, dans lequel le dispositif indicateur (90) comprend un affichage visuel, dans lequel l'affichage visuel affiche un graphique de partie de bateau qui est spécifique à une région présente de la pluralité de régions du moule (1) où la fibre de verre est actuellement appliquée, optionnellement dans lequel le module de commande (80) est configuré pour modifier une caractéristique du graphique de partie de bateau à base de la comparaison entre la quantité réelle de fibre de verre appliquée par l'applicateur (30) et la quantité souhaitée de fibre de verre à appliquer telle que définie par le cahier de charges, optionnellement dans lequel le cahier de charges définit une durée prévue pour l'application de la fibre de verre sur le moule (1), dans lequel le module de commande (80) est configuré pour compter un temps écoulé pendant lequel la fibre de verre a été appliquée sur le moule (1), et dans lequel le module de commande (80) est en outre configuré pour calculer un temps restant entre le temps écoulé et la durée prévue et pour amener l'affichage visuel à afficher le temps restant.

11. Le système selon la revendication 2, dans lequel une région antérieure de la pluralité de régions a reçu de la fibre de verre appliquée, dans lequel le module de commande (80) est configuré pour générer un plan de fabrication modifié pour appliquer la fibre de verre sur le moule (1) lorsque la quantité réelle de fibre de verre appliquée sur la région antérieure s'écarte de la quantité souhaitée de fibre de verre définie par le cahier de charges d'une quantité seuil, et dans lequel le module de commande (80) est configuré pour amener le dispositif indicateur (90) à indiquer le plan de fabrication modifié.

12. Le système selon la revendication 2, dans lequel le cahier de charges définit en outre une séquence pour appliquer la fibre de verre à la pluralité de régions du moule 81), et dans lequel le module de commande (80) est configuré pour amener le dispositif indicateur (90) à indiquer une région présente de la pluralité de régions où la fibre de verre est actuellement appliquée.

13. Un procédé de fabrication d'une pièce de bateau en fibre de verre, constituée d'une résine et d'un verre, à l'aide d'un moule et selon un cahier des charges qui définit une quantité souhaitée de fibre de verre à appliquer sur le moule, le procédé comprenant :
- fournir un applicateur (30) configuré pour appliquer la fibre de verre sur le moule (1);
- fournir la résine (32) à l'applicateur (30) avec un transporteur de résine (50) ;
- fournir le verre (34) à l'applicateur (30) avec un transporteur de verre (60) ;
- prendre une mesure avec un premier compteur d'une quantité réelle de résine (32) fournie à l'applicateur (30) par le transporteur de résine (50);
- prendre une mesure avec un deuxième compteur d'une quantité réelle de verre (34) fournie à l'applicateur (30) par le transporteur de verre (60) ;
- combiner la résine (32) et le verre (34) pour former la fibre de verre et appliquer la fibre de verre sur le moule (1) avec l'applicateur (60);
- faire une comparaison avec un module de commande (80) en temps réel entre une quantité réelle de fibre de verre délivrée par l'applicateur (30) et la quantité souhaitée de fibre de verre à appliquer sur le moule (1), dans lequel la quantité réelle est basée sur la mesure prise par le premier compteur et la mesure prise par le deuxième compteur ;
- calculer avec le module de commande (80) une quantité restante de fibre de verre à appliquer sur le moule (1) pour obtenir ainsi la quantité souhaitée ; et
- amener un dispositif indicateur (90), au moyen du module de commande (80), à indiquer en temps réel la quantité restante de fibre de verre à appliquer sur le moule (1).

14. Le procédé selon la revendication 13, dans lequel la partie de bateau a une pluralité de parties et le moule (1) a une pluralité de régions qui correspondent à la pluralité de parties, dans lequel la quantité souhaitée de fibre de verre comprend une pluralité de quantités souhaitées de fibre de verre, et dans lequel la pluralité de quantités souhaitées de fibre de verre correspond à la pluralité de régions du moule (1).

15. Un support lisible par ordinateur non transitoire comprenant un programme informatique pour effectuer le procédé selon la revendication 13.
